# EUROPÄISCHE PATENTSCHRIFT

(11) **EP 1 469 195 B1**
(45) Veröffentlichungstag und Bekanntmachung des Hinweises auf die Patenterteilung: **06.09.2006**
(21) Anmeldenummer: 04007502.0
(22) Anmeldetag: 26.03.2004
(51) Int. Cl.: F02N 11/08, B60K 6/00

(54) **Verfahren zum automatischen Abschalten einer Brennkraftmaschine**
Method for controlling the automatic engine stop
Méthode pour le commande de l'arrêt d'un moteur à combustion interne

(30) Priorität: 11.04.2003 DE 10316604
(43) Veröffentlichungstag der Anmeldung: 20.10.2004
(73) Patentinhaber: Bayerische Motoren Werke Aktiengesellschaft, 80809 München (DE)
(72) Erfinder: Steinle, Joachim, Dr., 80993 München (DE); Hohmann, Sören, Dr., 80999 München (DE)

(56) Entgegenhaltungen:
- EP-A- 1 052 399
- DE-A- 19 502 154
- US-A1- 2002 183 917
- US-B1- 6 334 834

## Beschreibung

Die Erfindung bezieht sich auf ein Verfahren zum automatischen Abschalten einer Brennkraftmaschine nach dem Oberbegriff des Patentanspruchs 1.

Derzeitig werden Brennkraftmaschinen meist mittels eines Zündschlüssels durch den Fahrer manuell abgeschalten. Eine Ausnahme stellt ein Verfahren dar, welches in der DE 100 23 331 A1 vorgestellt wird. Dabei wird anstelle des Zündschlüssels die Bremspedalstellung bzw. der Bremspedaldruck ausgewertet. Der Abschaltvorgang der Brennkraftmaschine wird eingeleitet, wenn nach Erreichen des Stillstands des Kraftfahrzeugs das Bremspedal in seiner bereits betätigten Stellung stärker betätigt wird. Nachteilig ist an derartigen Verfahren, dass alleine der Kraftfahrzeugfahrer für das Abschalten der Brennkraftmaschine verantwortlich ist. Analysen des heutigen Fahrverhaltens zeigen, dass trotz eines gestiegenen Umweltbewusstseins und gestiegener Kraftstoffpreise ein manuelles Abschalten der Brennkraftmaschine, z. B. an Verkehrsampeln, selten eigenständig erfolgt.

Um den Kraftstoffverbrauch und die CO₂-Emissionen von Kraftfahrzeugen zu reduzieren, wurden Verfahren und Vorrichtungen zum automatischen Abschalten einer Brennkraftmaschine entwickelt. Zum Beispiel geht aus der EP 0 158 605 B1 eine derartige Vorrichtung hervor, die abhängig von verschiedenen Bedingungen ein Abstellen bzw. ein erneutes Starten der Brennkraftmaschine bewirkt. Eine Bedingung ist beispielsweise, dass die Fahrzeuggeschwindigkeit für eine bestimmte Zeit unterhalb eines Grenzwertes liegen muss, bevor die Brennkraftmaschine automatisch abgestellt wird.

Nachteilig ist an derartigen Verfahren und Vorrichtungen, dass die aktuelle Verkehrssituation nicht berücksichtigt werden kann. Die Brennkraftmaschine wird demzufolge auch in solchen Situationen abgeschalten, in denen es der Fahrer aus Komfortgründen nicht wünscht. Beispielsweise ist ein automatisches Abschalten der Brennkraftmaschine an einer Abbiegespur oder an einem Stoppschild bei einer sofortigen Weiterfahrtmöglichkeit nicht erwünscht.

Aus der EP 1 052 399 A2 ist ein Motor-Start-Stopp-System für ein Fahrzeug mit Automatikgetriebe bekannt, bei dem ein automatisches Abschalten des Motors unterbunden wird, wenn der Rückwärtsgang eingelegt ist.

Des Weiteren ist aus der US 6 334 834 B1 ebenfalls ein Motor-Start-Stopp-System bekannt, bei dem ein automatisches Abschalten des Motors unterbunden werden kann.

Aufgabe der Erfindung ist, ein Verfahren zum automatischen Abschalten einer Brennkraftmaschine in der Weise zu verbessern, dass das aktuelle Verkehrsgeschehen mitberücksichtigt werden kann.

Diese Aufgabe wird erfindungsgemäß durch ein Verfahren nach Patentanspruch 1 gelöst. Vorteilhafte Weiterbildungen sind die Gegenstände der abhängigen Ansprüche, insbesondere eine Vorrichtung nach Patentanspruch 3.

Das erfindungsgemäße Verfahren zum automatischen Abschalten einer Brennkraftmaschine in einem Kraftfahrzeug mittels einer Start-Stopp-Einrichtung, die die Brennkraftmaschine automatisch abschaltet, sobald die dafür vorgegebenen Betriebsbedingungen für eine vorgegebene Zeit erfüllt sind, zeichnet sich dadurch aus, dass der Kraftfahrzeugfahrer innerhalb der vorgegebene Zeit das automatische Abschalten der Brennkraftmaschine verhindern kann.

Als vorgegebene Betriebsbedingungen, die ein automatisches Abschalten einleiten, wird z. B. vorrausgesetzt, dass die Fahrzeuggeschwindigkeit in etwa Null ist, ein gewisser Drehzahlwert der Brennkraftmaschine unterschritten ist und das Bremspedal betätigt ist. Sobald diese Bedingungen erfüllt sind, startet ein Timer. Liegen die vorgegebenen Betriebsbedingungen für die vorgegebene Zeit an, wird die Brennkraftmaschine automatisch durch die Start-Stopp-Einrichtung abgeschalten. Die Start-Stopp-Einrichtung kann bspw. ein eigenständiges Steuergerät, oder im Motorsteuergerät integriert sein. Steht der Kraftfahrzeugfahrer bspw. an einem Stoppschild (die vorgegebenen Betriebsbedingungen sind erfüllt) und erkennt, dass eine unmittelbare Weiterfahrt möglich ist, ist das automatische Abschalten der Brennkraftmaschine nicht erwünscht. Erfindungsgemäß kann er bspw. ein dafür vorgesehenes Bedienelement, bspw. einen Knopf, innerhalb der vorgegebenen Zeit betätigen, um das Abschalten zu verhindern. Bei einem Handschaltgetriebe kann bspw. auch die Kupplung getreten werden oder getreten sein, um der Start-Stopp-Einrichtung zu signalisieren, dass ein automatischen Abschalten momentan unerwünscht ist. Das automatische Abschalten kann auch mittels Spracheingabe verhindert werden.

Vorteilhafterweise kann dem Kraftfahrzeugfahrer mittels eines Anzeigeelements mitgeteilt werden, sobald er das automatische Abschalten der Brennkraftmaschine verhindern kann. Sind die vorgegebenen Betriebsbedingungen erfüllt, leuchtet bspw. eine LED auf, die dem Fahrer signalisiert, dass die Brennkraftmaschine in Kürze durch die Start-Stopp-Einrichtung abgeschalten wird. Als Anzeigeelement können aber auch Lautsprecher für ein akustisches Signal oder andere Elemente für optische oder haptische Signale verwendet werden. Ab diesem Zeitpunkt kann der Kraftfahrzeugfahrer das Abschalten der Brennkraftmaschine verhindern.

Vorteilhafterweise kann der Kraftfahrzeugfahrer zum Verhindern des automatischen Abschaltens der Brennkraftmaschine das Bremspedal verstärkt durchtreten. Bei dieser erfindungsgemäßen Weiterbildung ist kein zusätzliches Bedienelement notwendig Die Intensität des Bremsdrucks kann mittels eines Bremsdrucksensors festgestellt werden. Die notwendige Stärke des Nachtretens des Bremspedals hängt dabei bspw. von der aktuellen Steigung ab, die über einen Algorithmus mit Hilfe des vor dem automatischen Abschalten benötigten Motormoments und des zuvor eingestellten Bremsenvordrucks festgestellt wird. Diese Abschätzung des notwendigen Zusatzbremsdrucks ist erforderlich, um bei Steigungen ein Zurückrollen des Kraftfahrzeugs nach Abstellen der Brennkraftmaschine zu verhindern.

In einer bevorzugten Vorrichtung können vorteilhafterweise zusätzlich zu den vorgegebenen Betriebsbedingungen noch variable länderspezifische und/oder variable, durch den Kraftfahrzeugfahrer einstellbare, Zusatzbedingungen für das automatische Abschalten der Brennkraftmaschine vorgegeben werden.

Eine länderspezifische Zusatzbedingung kann bspw. das Überprüfen der Klimatisierung sein. In skandinavischen Ländern kann bspw. ein automatisches Abschalten der Brennkraftmaschine nur erlaubt sein, wenn eine vorgegebene Innenraum-Temperaturschwelle überschritten ist. Zusätzlich kann der Kraftfahrzeugfahrer vorteilhafterweise noch eigene variable Zusatzbedingungen vorgeben, bei denen ein Abschalten der Brennkraftmaschine möglich ist. Bspw. kann er vorgeben, dass die Fahrzeuginnenraum-Temperatur in einem vorgegebenen Bereich liegen muss. Ist die Fahrzeuginnenraum-Temperatur bspw. zu hoch, kann die Brennkraftmaschine nicht automatisch abgeschalten werden, da die Klimaanlage die zum Kühlen nötige Energie aus der Brennkraftmaschine benötigt.

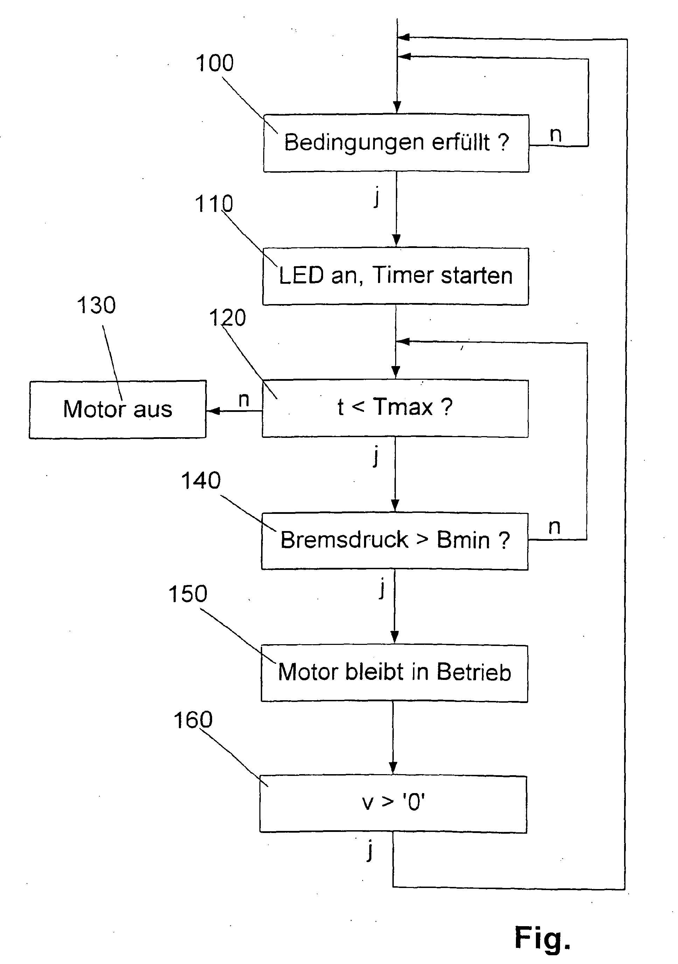

In der Zeichnung ist ein Ausführungsbeispiel der Erfindung dargestellt. Die Fig. zeigt ein vereinfachtes Ablaufdiagramm für das erfindungsgemäße Verfahren am Beispiel eines Kraftfahrzeugs mit Automatikgetriebe.

Das Verfahren zum automatischen Abschalten einer Brennkraftmaschine ist in einer Start-Stopp-Einrichtung oder in einem Steuergerät integriert. In einem 1. Schritt 100 werden alle Bedingungen (Betriebsbedingungen und Zusatzbedingungen), die für ein automatisches Abschalten der Brennkraftmaschine notwendig sind, abgefragt. Hierbei handelt es sich bspw. um die Fahrzeuggeschwindigkeit, die unter einem vorgegebenen Grenzwert liegen muss, die Drehzahl, die unter einem vorgegebenen Grenzwert liegen muss und das Bremspedal, das betätigt werden muss. Diese Bedingungen werden während des ganzen Verfahrens abgefragt. Nur wenn alle Bedingungen erfüllt sind, wird das Verfahren weiter durchgeführt. Andernfalls wird es abgebrochen und das Verfahren beginnt von vorne.

Sind alle Bedingungen erfüllt, wird in einem 2. Schritt 110 eine LED als Anzeigeelement eingeschalten. Damit wird dem Kraftfahrzeugfahrer mitgeteilt, dass die Brennkraftmaschine nach einer vorgegebenen Zeit ausgeschalten wird, wenn er dies nicht verhindert. Gleichzeitig wird im Schritt 110 ein Timer gestartet, der die Zeit überwacht.

Anschließend wird in einem nächsten Schritt 120 die vergangene Zeit abgefragt. Solange der vergangene Zeit kleiner als die vorgegebene Zeit ist, wird in einem nächsten Schritt 140 der aktuelle Bremsdruck überwacht. Wenn aktuelle Bremsdruck eine zum Anfangsbremsdruck erhöhte vorgegebene Schwelle nicht überschreitet, wird auf den Schritt 120 zurückgesprungen und die Zeitüberwachung weiterhin durchgeführt. Wenn die vergangene Zeit größer als die vorgegebene Zeit ist, wird im Schritt 130 die Brennkraftmaschine automatisch abgeschaltet.

Übersteigt aber der aktuelle Bremsdruck innerhalb der vorgegebenen Zeit den Brems-Grenzwert, der zum Anfangsbremswert abhängig von der Steigung um ein einen vorgegebenen Bremsdruck erhöht ist, ist dies das Signal, dass in einem nächsten Schritt 150 das automatische abschalten der Brennkraftmaschine verhindert wird und die Brennkraftmaschine in Betrieb bleibt. Erst wenn in einem letzten Schritt 160 die Fahrzeuggeschwindigkeit wieder größer als in etwa Null ist, beginnt das Verfahren von neuem.

Es können eine Vielzahl weiterer Details durchaus abweichend von obiger Beschreibung gestaltet sein, ohne den Inhalt der Patentansprüche zu verlassen.

## Patentansprüche

1. Verfahren zum automatischen Abschalten einer Brennkraftmaschine in einem Kraftfahrzeug mittels einer Start-Stopp-Einrichtung, die die Brennkraftmaschine automatisch abschaltet, sobald die dafür vorgegebenen Betriebsbedingungen für eine vorgegebene Zeit erfüllt sind, **dadurch gekennzeichnet, dass** der Kraftfahrzeugfahrer innerhalb der vorgegebenen Zeit das automatische Abschalten der Brennkraftmaschine derart verhindern kann, dass der Kraftfahrzeugfahrer zum Verhindern des automatischen Abschaltens der Brennkraftmaschine das Bremspedal verstärkt durchtritt.

2. Verfahren nach Patentanspruch 1, **dadurch gekennzeichnet, dass** dem Kraftfahrzeugfahrer mittels eines Anzeigeelements mitgeteilt wird, sobald er das automatische Abschalten der Brennkraftmaschine verhindern kann.

3. Vorrichtung zur Durchführung des Verfahrens nach einem der Patentansprüche 1 bis 2.

4. Vorrichtung nach Patentanspruch 3, **dadurch gekennzeichnet, dass** zusätzlich zu den vorgegebenen Betriebsbedingungen, variable länderspezifische und/oder variable, durch den Kraftfahrzeugfahrer einstellbare, Zusatzbedingungen vorgegeben sind.

## Claims

1. A method of automatically switching off an internal combustion engine in a motor vehicle, using a start-stop device which automatically switches the engine off as soon as the relevant set operating conditions are met for a set time, **characterised in that** within the set time, the driver can prevent the engine being automatically switched off by pressing the brake pedal more strongly.

2. A method according to claim 1, **characterised in that** an indicator element informs the driver as soon as he can prevent automatic switching-off of the engine.

3. A device for working the method according to claim 1 or 2.

4. A device according to claim 3, **characterised in that** in addition to the set operating conditions, various additional conditions can be set for specific countries and/or adjustable by the driver.

## Revendications

1. Procédé destiné à couper automatiquement un moteur à combustion interne dans un véhicule automobile au moyen d'un système d'arrêt-relance (stop and go) qui coupe automatiquement le moteur à combustion interne dès que des conditions prédéterminées à cet effet pour une durée prédéterminée sont remplies,
**caractérisé en ce que**
le conducteur du véhicule automobile peut empêcher la coupure automatique du moteur à combustion interne au sein de la durée prédéterminée de telle sorte que le conducteur du véhicule automobile appuie plus fortement sur la pédale de frein pour empêcher la coupure automatique du moteur à combustion interne.

2. Procédé selon la revendication 1,
**caractérisé en ce que**
le conducteur du véhicule automobile est informé au moyen d'un élément d'affichage dès qu'il peut empêcher la coupure automatique du moteur à combustion interne.

3. Dispositif destiné à mettre en oeuvre le procédé selon l'une des revendications 1 à 2.

4. Dispositif selon la revendication 3,
**caractérisé en ce qu'**
on prédétermine, en plus des conditions de fonctionnement prédéterminées, diverses conditions supplémentaires spécifiques aux pays et/ou pouvant être réglées par le conducteur du véhicule automobile.
